# EUROPEAN PATENT APPLICATION

(11) **EP 1 956 481 A2**
(43) Date of publication of application: **13.08.2008**
(21) Application number: 08250473.9
(22) Date of filing: 08.02.2008
(51) Int. Cl.: G06F 9/44, G06F 17/30

(54) **Presenting content to a browser**

(30) Priority: 09.02.2007 US 704428
(71) Applicant: Fortent Limited, London WC1A 1HB (GB)
(72) Inventor: White, Thomas, London WC1A 1HB (GB); McLaren, Iain Douglas, London WC1A 1HB (GB)
(74) Representative: Small, Gary James

(57) **Abstract**

There is provided a method that includes (a) requesting first data for a first region of a display, and second data for second region of the display, (b) presenting first information in the first region, based on the first data, (c) commencing processing of an input that results from a user interaction with the first information, and (d) subsequent to the commencing processing of the input, presenting second information in the second region, based on the second data.

## Description

### BACKGROUND OF THE INVENTION

### 1. Field of the Invention

The present disclosure relates to a browser, and more particularly, to a technique for presenting content to the browser for display.

### 2. Description of the Related Art

A browser, e.g., an Internet browser, links to a server that is identified by a uniform resource locator (URL). The server prepares a page of content that is transmitted to the browser, and displayed by the browser.

In a classic web application, a user action at a client system triggers a hypertext transfer protocol (HTTP) request to a web server. The web server performs some processing (e.g., retrieving data, crunching numbers) and returns a hypertext markup language (HTML) page to the client system. The HTML page may have nested links that cause further web server requests, e.g., to retrieve images. An application of this type usually includes a number of screens each providing a different context associated with the application, and representing and defining the application flow. The application is a sequence of pages that are each loaded from the web server. In order to proceed to the next step, the user must wait for a new page to be loaded from the web server. If web server response times are slow, the user will have to wait for the next page to be loaded before the user can continue with the application. A checkout process associated with web shopping applications is an example of such an application.

Web applications have also been created where a processing engine is placed in the user's browser in order to allow more complex interactions, and to control aspects associated with the application. These applications use a combination of JavaScript™ and extensible markup language (XML) technologies and allow user requests to the server to be dealt with in an asynchronous way. JavaScript™ is a registered trademark of Sun Microsystems, Inc. These are often termed AJAX (Asynchronous JavaScript™ and XML) applications. AJAX applications are generally monolithic and built for a single function. AJAX incorporates:
A. standards-based presentation using extensible hypertext markup language (XHTML) and cascading style sheets (CSS);
B. dynamic content, dynamic display and interaction using a document object model (DOM);
C. data interchange and manipulation using XML and extensible style sheet language transformations (XSLT);
D. asynchronous data retrieval using XMLHttpRequest (XHR); and
E. JavaScript™ used to control the functions of the application.

### SUMMARY OF THE INVENTION

There is provided a method that includes (a) requesting first data for a first region of a display, and second data for a second region of the display, (b) presenting first information in the first region, based on the first data, (c) commencing processing of an input that results from a user interaction with the first information, and (d) subsequent to the commencing processing of the input, presenting second information in the second region, based on the second data.

### BRIEF DESCRIPTION OF THE DRAWINGS

FIG. 1 is a block diagram of a system that includes a display engine for presenting content to a browser.

FIG. 2 is an illustration of a screen element produced by the display engine of FIG. 1.

FIG. 3 is a block diagram of a data structure that is used to create a screen element.

FIG. 4 is an illustration of a browser screen partitioned into a plurality of target areas.

FIG. 5. is a block diagram of a data structure used to maintain the state of the display engine of FIG. 1.

FIG. 6 is a block diagram of a data structure that presents presentational and artifact components contained within a screen element produced by the display engine of FIG. 1.

FIG. 7. is an exemplary embodiment of a task queue that is used by the display engine of FIG. 1 to process items for display.

FIG. 8 is a flowchart of a method for creating a screen element and populating a browser screen.

FIG. 9 is a flowchart of a method for processing tasks in a task queue of the display engine shown in FIG. 1.

FIG. 10 is a block diagram of a system in which the display engine shown in FIG. 1 is present.

FIG. 11 is a block diagram of an apparatus that facilitates the operation of the display engine shown in FIG. 1.

### DESCRIPTION OF THE INVENTION

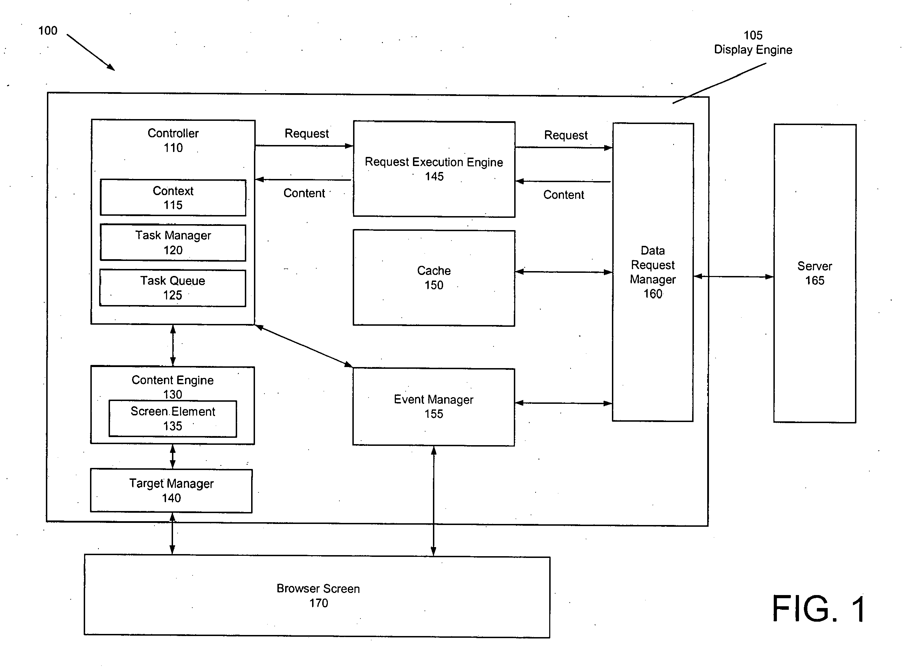

FIG. 1 is a block diagram of a system 100, that includes a display engine 105 for presenting content to a browser, e.g. an Internet web browser. System 100 also includes a server 165 and a browser screen 170. Display engine 105 is an AJAX display engine, and runs as an application inside the browser. Browser screen 170 is rendered by the browser.

Display engine 105 retrieves data from server 165, transforms the data, and presents the data to browser screen 170 for display on browser screen 170. Display engine 105 includes a controller 110, a content engine 130, a target manager 140, a request execution engine 145, a cache 150, an event manager 155, and a data request manager 160.

Event manager 155 interprets an event, such as a mouse click, a mouse movement or a button press, that is a result of user interaction with screen content displayed on browser screen 170. Thus, event manager 155 is responsible for managing the user interaction of the display engine 105. Event manager 155 also receives events from data request manager 160 that result from messages from server 165, or that result from activity involving server 165. Event manager 155 filters and processes the events and passes results of the events to controller 130 for further processing.

Controller 110 maintains a state associated with display engine 105, and controls processing steps to retrieve data from server 165, and for the data to be displayed on browser screen 170. Controller 110 includes a context 115, a task manager 120, and a task queue 125. Context 115 is an in memory representation of the state of the application. Task manager 120 and task queue 125 are used to control an asynchronous execution of tasks to be performed by display engine 105, in order to retrieve, transform and display data on browser screen 110, and to handle user and server interactions from event manager 155.

Content engine 130 creates a screen element 135 that is ultimately displayed on browser screen 170. Content engine 130 receives (a) content data, i.e., data that is to be displayed by screen element 135, and (b) presentation data, i.e., data that defines the layout and format of screen element 135. Content engine 130 processes, e.g., combines and transforms, the content data and the presentation data to create screen element 135, and passes screen element 135 to target manager 140.

Target manager 140 receives screen element 135 from content engine 130, and displays screen element 135 on browser screen 170. More specifically, target manager 140 displays screen element 135 at a location, i.e., a target, on browser screen 170. The target it is not necessarily specified as an actual location, e.g., in terms of x and y coordinates, but instead can define a zone or a region on browser screen 170, laid out in respect to other regions. The target, depending on its definition, could be of a fixed size, although it would have a relative position in respect to other targets, or could be defined such that the target re-sizes in relation to the content that it displays, or as part of the definition of the content that it will display.

Data request manager 160 is an interface between other components of display engine 105 and server 165. More particularly, data request manager 160 manages data requests from display engine 105 to server 165, and retrieves and manages responses to those data requests from server 165. Data request manager 160 decides whether to issue a request to server 165 for the data, or whether such data can be obtained from cache 150, which stores previously retrieved data. By using cache 150, the number of requests to server 165 can be minimized, and system 100 will operate more efficiently. Data request manager 160 may also use maintained statistics associated with server response times to data requests in order to provide controller 110 details of the estimated data retrieval times. Such estimates may be provided by data request manager 160 as part of the response to data requests.

Request execution engine 145 manages commands to retrieve data from server 165. Request execution engine issues a request for data to data request manager 160, receives the retrieved data from data request manager 160, and passes the data to controller 110. Request execution engine 145 issues the requests asynchronously to one another. That is, a new request can be issued before a previous request has been fulfilled.

Request execution engine 145 retrieves three types of data from server 165, namely context data, content data, and presentation data.

Context data defines the state of the display engine 105. Display engine 105 requests context data from the server 165 when the application is first initialized. Context data is maintained by controller 110 in context 115. Later requests to server 165 may preserve or persist context 115 so that the application can be re-started from the point that it was closed.

Content data, as mentioned above, is data that is to be displayed by screen element 135. Content data may or may not be cached in cache 150. Some types of content data are always cached (e.g., those where the data will not change), others are never cached, and others may be placed in cache 150 but invalidated over time through either a cache aging method or through an explicit command, e.g., a system refresh.

Presentation data, as mentioned above, defines the layout and format of screen element 135. Presentation data, after being retrieved from server 165, is cached in cache 150, and so, needs to be retrieved from server 165 only once.

As mentioned above, content engine 130 processes the content data and the presentation data to create screen element 135. Controller 110 passes data to content engine 130 for this task. Such processing may result in controller 110 issuing requests to request execution engine 145 to obtain additional content data and presentation data. Also, although FIG. 1 shows only one screen element 135, content engine 130 may create a plurality of different screen elements 135 that are simultaneously displayed at different targets on browser screen 170.

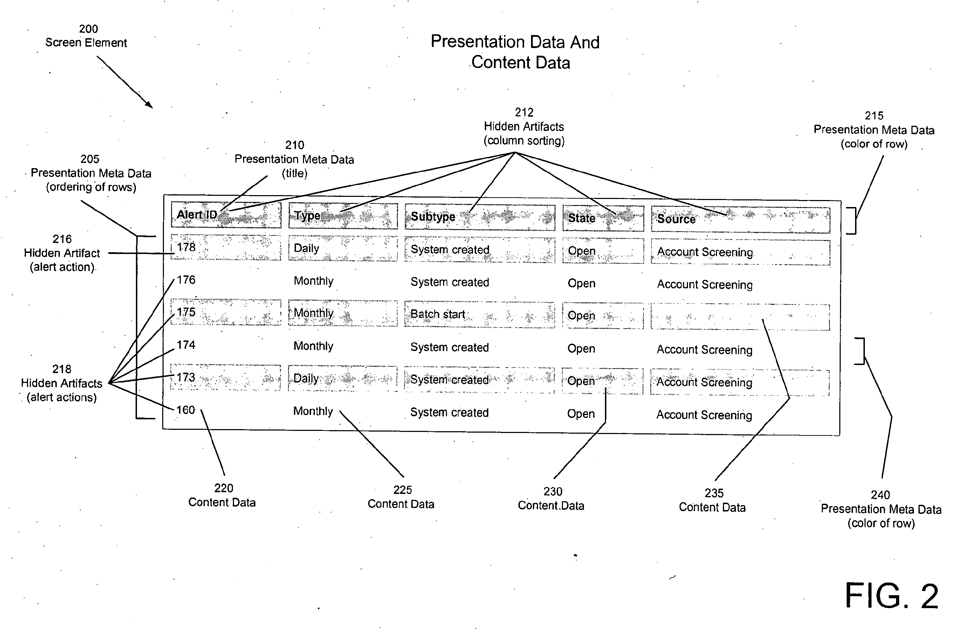

FIG. 2 is an illustration of a screen element 200 that is an exemplary embodiment of screen element 135. Screen element 200 is a table of rows and columns.

The layout or format of screen element 200 is defined by presentation meta data, e.g., presentation meta data 205, 210, 215 and 240. Presentation meta data 205 defines an ordering of rows. Presentation meta data 210 defines a title of a column.
Presentation meta data 215 defines a color of a row, in this case a header row.
Presentation meta data 240 defines a color of a row in the body of the table. Any other presentational attributes could be defined in this way.

Screen element 200 is populated with content data, e.g., content data 220, 225, 230 and 235. Content data 220 is the number "160." Content data 225 is the word "Monthly." Content data 230 is the word "Open." Content data 235 is an empty value, e.g., blank.

A hidden artifact is a data feature that defines a possible change to the context of display engine 105 that will result in a change to the presentation of a screen element displayed on browser screen 170. Where an event is a result of a user interaction with a presentational element associated with a screen element 135, the event will contain details of any hidden artifact associated with the presentational element. The hidden artifact is passed from browser screen 170 to event manager 155. Event manager 155 then passes the hidden artifact to controller 110 for further processing.

Screen element 200 includes hidden artifacts 212, 216 and 218. Hidden artifacts 216 and 218 are alert actions, and hidden artifact 212 is a column sorting action. For example, as a consequence of user input such as a mouse click on a header of a column, hidden artifact 212 is sent with an event, from browser screen 170 to event manager 155, thus indicating that the user wishes to sort the table shown in screen element 200 based on data in the column.

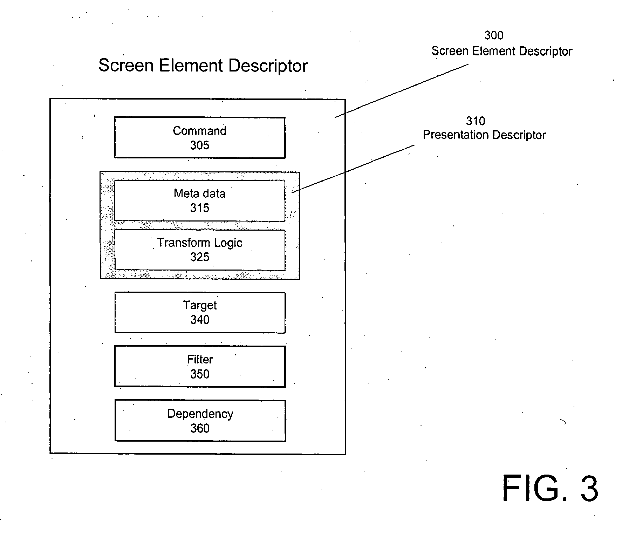

FIG. 3 is a block diagram of a screen element descriptor 300, which is a data structure that defines elements of data that are to be retrieved from server 165 and used by display engine 105, and more particularly controller 110 and content engine 130, to create screen element 135. Screen element descriptor 300 includes a command 305, a presentation descriptor 310, a target 340, a filter 350, and a dependency 360.

Command 305 indicates, either directly or by reference, a command relating to an acquisition of content data. The command is managed by request execution engine 145, and if the content data is to be obtained from server 165, as opposed to being obtained from cache 150, the command will be executed on server 165.

It is possible that command 305 may result in no content data being returned. Content data that was then subsequently processed for display would result in blank fields being generated.

Presentation descriptor 310 is a data structure that contains a reference to presentation data that is to be retrieved by request execution engine 145. Presentation data requests are managed by request execution engine 145. If the presentation data is not available in the cache 150, then it will be obtained from server 165. Presentation descriptor 310 includes meta data 315 and transform logic 325.

Meta data 315 provides a reference to presentational aspects to be applied by content engine 130, to create screen element 135. Examples of presentational aspects include ordering of rows, title of a column, and color of a row (for examples, see FIG. 2, items 205, 210, 215 and 240). Meta data 315 can also describe other aspects of screen element 135 relating, for instance, to a layout of a chart, a sort order of rows or columns, or other graphic or non-tabular layouts. Meta data 315 references meta data to be retrieved by request execution engine 145. If the meta data is not available in cache 150 then it is obtained from server 165. The meta data may be blank or null, in which case it is not applied during transformation. The first time that the meta data is retrieved, it is stored by controller 110 in context 115.

Transform logic 325 provides a reference to a type of processing, e.g., an XSLT style sheet or JavaScript™, to be applied by content engine 130 to create screen element 135. A template defines a skeleton of a document to be displayed on-screen, with placeholders for content data. Transform Logic 325, in a preferred embodiment, provides a reference to an XSLT style sheet, but other types of transformation logic may be referenced. XSLT is a templating language, and is preferred because current web browsers support the XSLT standard. Also, since XSLT is a form of XML, server 165 only needs to support the transmission of XML. Both the content data and the presentation data can be XML and can be easily stored in the same cache 150. XSLT was specifically developed for the transformation of XML documents and it is therefore well-suited for this purpose.

Target 340 indicates a position on browser screen 170 at which screen element 135 is to be displayed.

Filter 350 provides a matching function that is applied by controller 110 against the context 115, and more specifically the display context in order to identify whether screen element descriptor 300 should be considered for processing. Since such processing results in the creation and display of screen element 135, filter 350 defines the application state in which screen element 135 should be displayed. Filter 350 may be a regular expression to be applied against context 115 in order to identify a match, but could also comprise rules or equivalent methods in order to identify a match. After filter 350 matches context 115, screen element descriptor 300 may become a candidate for processing in order to create screen element 135 for display.

Dependency 360 defines a list of one or more targets upon which screen element descriptor 300 is dependent for it to be processed. If the targets defined by dependency 360 are not available, that is they either do not yet exist on the browser screen or have yet to be populated, i.e. the screen element 135 that populates that target has yet to be displayed, then screen element descriptor 300 will not be processed. Once all dependencies associated with the dependency 360 are satisfied, screen element descriptor 300 may become a candidate for processing in order to create screen element 135 for display.

Thus, screen element descriptor 300 provides an association between (a) a command 305 to be executed in order to retrieve data from server 165, (b) the form of processing and presentation for presentation descriptor 310, (c) a target 340 at which transformed data will be displayed on screen 170, (d) a filter 350 that defines when screen element descriptor 300 should be considered for processing, and (e) a dependency 360 that defines targets that must have already been populated in order for screen element descriptor 300 to be considered for processing.

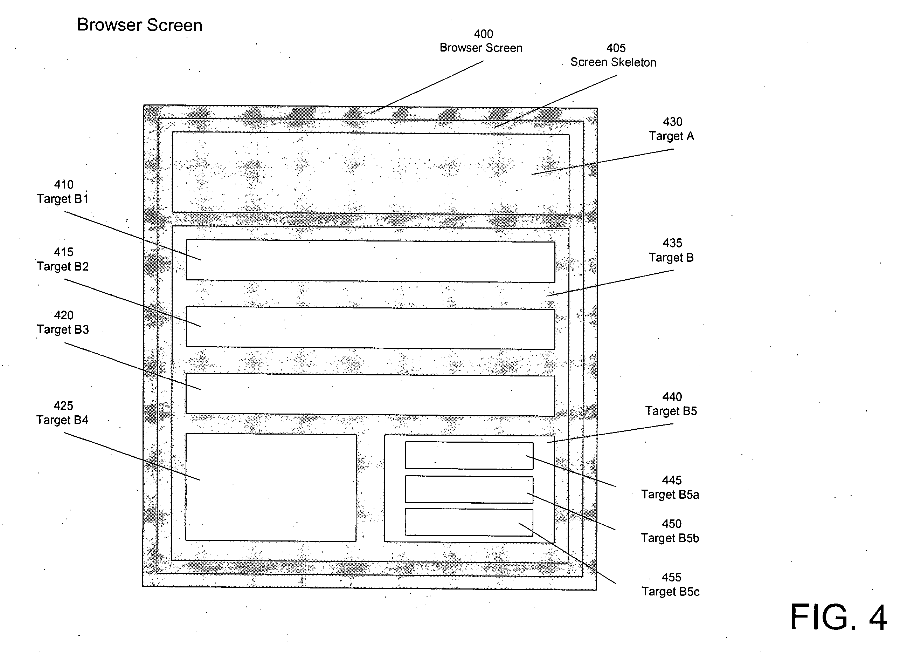

FIG. 4 is an illustration of a browser screen 400 that is an exemplary embodiment of browser screen 170. On browser screen 400, a screen skeleton 405 provides a screen layout for one or more target areas, e.g., targets 410 - 455, that will be populated with screen elements 135 generated by content engine 130. Screen skeleton 405 can be developed, for example, as a web page configured with HTML or XHTML with CSS.

Screen element 135 is itself also HTML or XHTML, and therefore, displaying screen element 135 can create further nested targets. For example, screen skeleton 405 provides two targets for screen content, namely a target A 430 and a target B 435. The population of target B 435 has created an additional set of screen targets, namely, a target B 1 410, a target B2 415, a target B3 420, a target B4 425, and a target B5 440. In turn the population of target B5 440 has created additional targets for content in a target B5a 445, a target B5b 450, and a target B5c 455. Thus, each target can be populated either (a) by screen elements 135 that describe content such as text, lists, tables, graphs, buttons or other graphical elements, or (b) with further nested targets. The further nested targets are in themselves screen elements 135, but those that define one or more additional targets.

As mentioned above, with reference to FIG. 3, screen element descriptor 300 includes a dependency. An example, considering FIG. 4, of dependency management would be a screen element descriptor 300 with a target 340 referencing Target B4 425 having a dependency 360 defining Target B 435, Target B1 410 and Target B3 420. In such a case, screen element descriptor 300 would not be considered for processing until each of Target B 435, Target B1 410 and Target B3 420 had been populated. In other words, the screen element described by this screen element descriptor 300 would not be created until Target B 435, Target B1 410 and Target B3 420 had been processed for display.

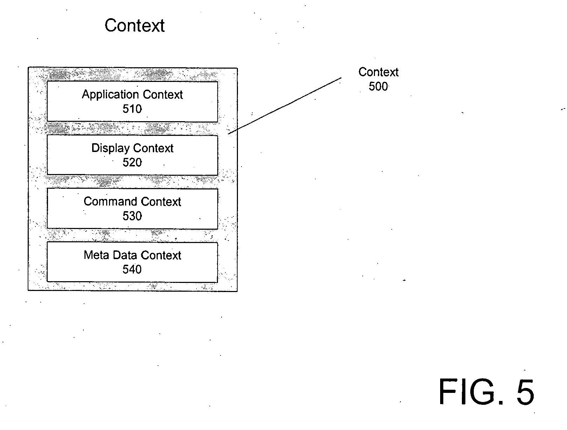

FIG. 5 is a block diagram of a data structure, namely context 500, that is an exemplary embodiment of context 115. Context 500 is a data structure that includes an application context 510, a display context 520, a command context 530, and a meta data context 540. Context 500 is held in memory by controller 110, and is used to retain and maintain the state of display engine 105.

Application context 510 retains primary information relating to the application. Application context 510 holds details of the universe of screen element descriptors 300 that can be processed by display engine 105 and other information relating to the initialization of display engine 105.

Display context 520 holds the state of browser screen 170. Filter 350 in a screen element descriptor 300 is applied to the display context 520 in order to identify if the screen element descriptor 300 is a candidate for display.

Command context 530 defines command parameters that are associated with a command 305 of a screen element descriptor 300 when that command 305 is executed by request execution engine 145.

Meta data context 540 provides a store of meta data that is applied by the content engine 130 during the creation of screen element 135.

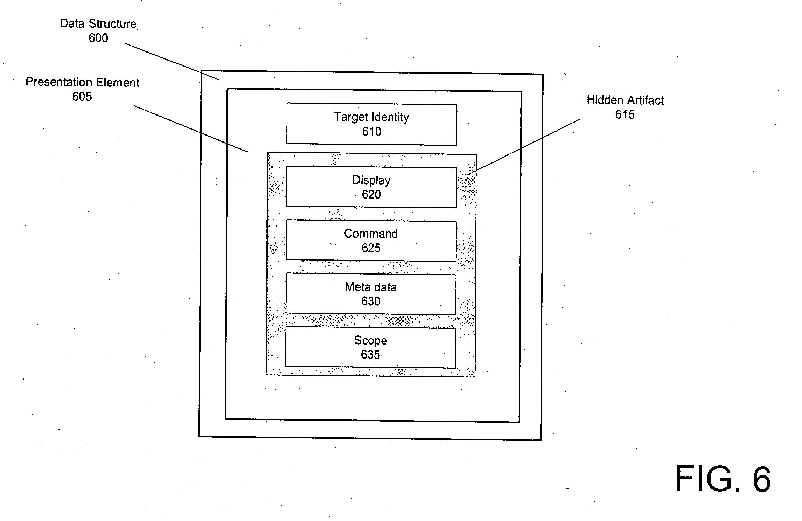

FIG. 6 is a block diagram of a data structure 600 relating to the preparation of screen element 135. More particularly, data structure 600 includes a presentation element 810 for each component of screen element 135. FIG. 6 shows data structure 600 having one presentation element 605, but data structure 600 may contain many presentation elements 605 and each presentation element 605 may itself further contain further presentation elements 605. This nested relationship is a feature of XML, HTML and XHTML.

Presentation element 605 includes a target identity 610 and a hidden artifact 615.

Target identity 610 defines a target to be populated with further screen elements 135. If there are no further screen elements, target identity 610 contains a null value.

As mentioned above, screen element 135 can contain a presentational element with a hidden artifact used to control the application, e.g., see hidden artifact 216. As a result of user interaction with presentation element 605, the hidden artifact is passed from screen element 135 to event manager 155, and from event manager 155 to controller 110. Hidden artifact 615 corresponds with the hidden artifact from screen element 135. Hidden artifact 615 includes fields that define a display 620, a command 625, meta data 630, and scope 635. If screen element 135 does not contain any hidden artifact, then hidden artifact 615 contains a null value.

When the hidden artifact is passed to controller 110, display 620, command 625 and meta data 630 are applied to change the content of display context 520, command context 530 and meta data context 540, respectively. In this way the application of a hidden artifact can change the state of display engine 105. A change to display context 520 may result in a creation of a new screen element 135 or an updating of an existing screen element 135. A change to command context 530 may result in different content data being retrieved from server 165 as part of a screen update. A change to meta data context 540 may result in a reformatting or other changes to screen elements. Scope 635 provides a list of targets against which an update should be performed. Other screen elements that are dependent on these targets may also be updated.

Consider controller 110 in further detail. Controller 110 provides control functions for display engine 105 and context 115, and also includes task manager 120, and task queue 125.

Task manager 120 identifies screen element descriptors 300 held in context 115, and more particularly display context 520, that are candidates for processing in order to create screen elements 135 for display. Task manager 120 is also responsible for resolving dependencies between the screen element descriptors 300 in order to further define which screen element descriptors 300 may be candidates for processing. Task manager 120 is responsible for populating the task queue 125 with tasks. Task manager 120 may re-order or change the position of particular tasks in task queue 125, or assign priorities to tasks based on known dependencies. Task manger 120 can also pre-fetch presentation data or batches of presentation data for groups of screen element descriptors 300 or perform other optimizations in order to improve the efficiency of task execution.

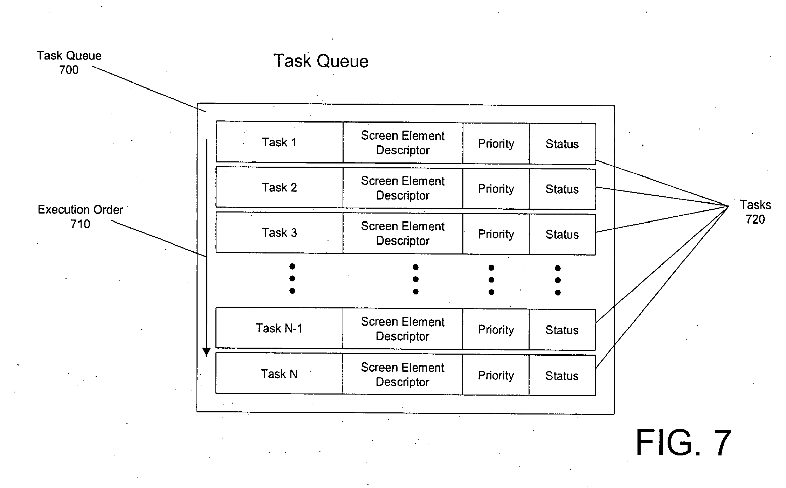

FIG. 7 is an illustration of a task queue 700 that is an exemplary embodiment of task queue 125. Task queue 700 includes tasks 720 in a list having an execution order 710.

Each task 720 is associated with a screen element descriptor 300 for display, and has an associated priority and status. Only one task 720 for any screen element descriptor 300 can be active in task queue 700 at any one time. Task queue 700 prevents duplicate tasks from being created. Tasks 720 are ordered based on their priority and also the order in which they were inserted into task queue 700, and are executed according to the task queue ordering of execution order 710. The status of each task 720 is updated as tasks 720 are executed. The status records whether and what data has been requested for a task 720 and whether the task 720 is complete. Once a task 720 is completed, it is removed from task queue 700. Each task 720 will result in data requests being handled by request execution engine 145 to data request manager 160, which result in data being retrieved from server 165 or from cache 150. Task queue 700 can control the number of simultaneous requests that may be made in order to limit the load placed on the server 165. The type of data to be requested is identified from presentation descriptor 310 and command 305. Data requests are handled by request execution engine 145 and are asynchronous to on another.

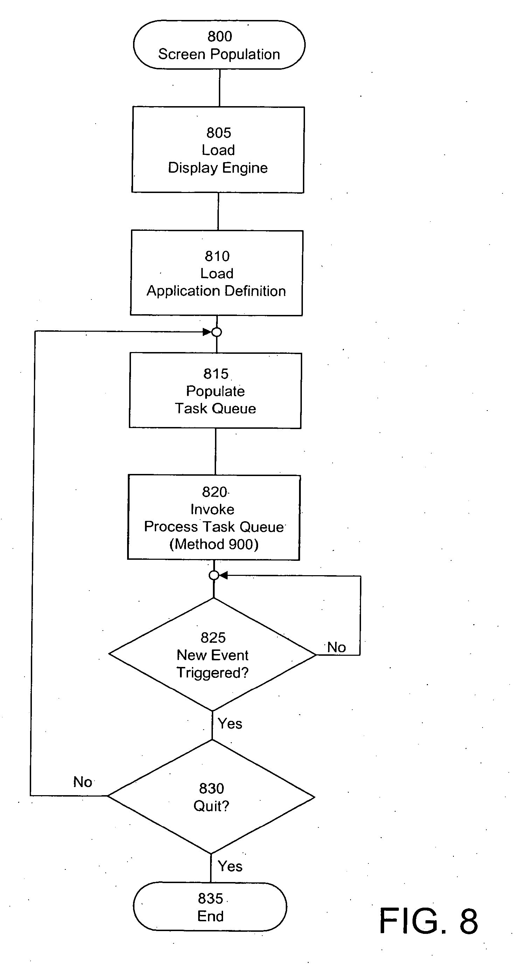

FIG. 8 is a flowchart of a method 800 for creating screen element 135 and populating browser screen 170. Method 800 starts by entering step 805.

In step 805, display engine 105 is loaded by a browser as the result of a page request to server 165, initiated by a user making a request for a URL to be loaded into the browser. Display engine 105 is then returned as a result of the URL request and may be within a requested web page, or within additional web pages referenced by a requested page. The load is triggered by a user clicking on a relevant web page link or by typing the URL directly into the browser. This may be done using a secure link and following password or security verification. Display engine 105 can be implemented in JavaScript^{™} code that is part of a standard html page. Such code may be held in a 'hidden' web page that is not displayed. Display engine 105 manipulates the DOM of the browser in order to dynamically create pages on the browser screen that are visible to the user.

Accompanying the display engine 105 when it is loaded into the browser is global data, i.e., data that may be used by various elements of display engine 105 during its operation. One type of global data that is loaded into the browser is data for temporary screen element generation. This data takes the form of content data and presentation data that may be utilized by content engine 130 to generate screen element 135. From step 805, method 800 advances to step 810.

In step 810, display engine 105 obtains, from server 165, an application definition that includes application parameters, the screen skeleton, a collection of screen element descriptors 300, initial parameters for commands to be executed, and a set of display parameters to define which of the screen element descriptors 300 should be displayed. These are held by the controller 110 in the context 115, and more specifically display context 520. Using the application definition allows for display engine 105 to be configured to support a range of different applications for different purposes. For instance, the same display engine 105 could be used (a) to create a user interface for a display and investigation of financial data, or (b) to operate as an email client. The application parameters, screen skeleton, and screen element descriptors 300 are stored in application context 510, the display parameters are held in the display context 520, and command parameters are held in command context 530. Display engine 105 may also perform additional data pre-fetching activities to improve process efficiency. For example, to pull presentation and content data into cache 150, or to pull a block of this data such that a one time fetch can retrieve a large number of sub-sets of data into cache 150. From step 810, method 800 advances to step 815.

In step 815, task manager 120 populates task queue 125. The screen element descriptors 300 contained in application context 510 are processed in order to identify which screen element descriptors 300 should be considered for further processing and display. This is performed by task manager 120, which identifies which screen element descriptors 300 should be processed for display based on current context of the application, and populates task queue 125 with corresponding tasks.

Each screen element descriptor 300 firstly has its filter 350 applied against display context 620. If the filter 350 matches (i.e., the result is true) then the corresponding screen element descriptor 300 is considered as a candidate for further processing. For screen element descriptors 300 considered for further processing, task manager 120 identifies that the target for the screen element descriptor 300 is valid and present on browser screen 170. This is performed by comparing the target against display context 520. Controller 110, in display context 520, maintains a list of available targets, as screen element descriptors 300 are processed to create screen elements 135. Such information could also be queried by controller 110 from browser screen 170. Screen element descriptors 300 that have valid targets are then considered for further processing.

For the screen element descriptors 300 that are both candidates for display and also have valid targets, task manager 120 creates a list of dependencies for the remaining screen element descriptors 300 based on the target dependency 360 of each screen element descriptor 300. The screen element descriptors 300 that are dependent only on targets already present on browser screen 170 are then added as tasks to the task queue 125 for execution. Only tasks that are associated with screen element descriptors 300 not already in task queue 125 are actually added to task queue 125. The priority of the tasks can be set at this time by the task manager 120. From step 815, method 800 advances to step 820.

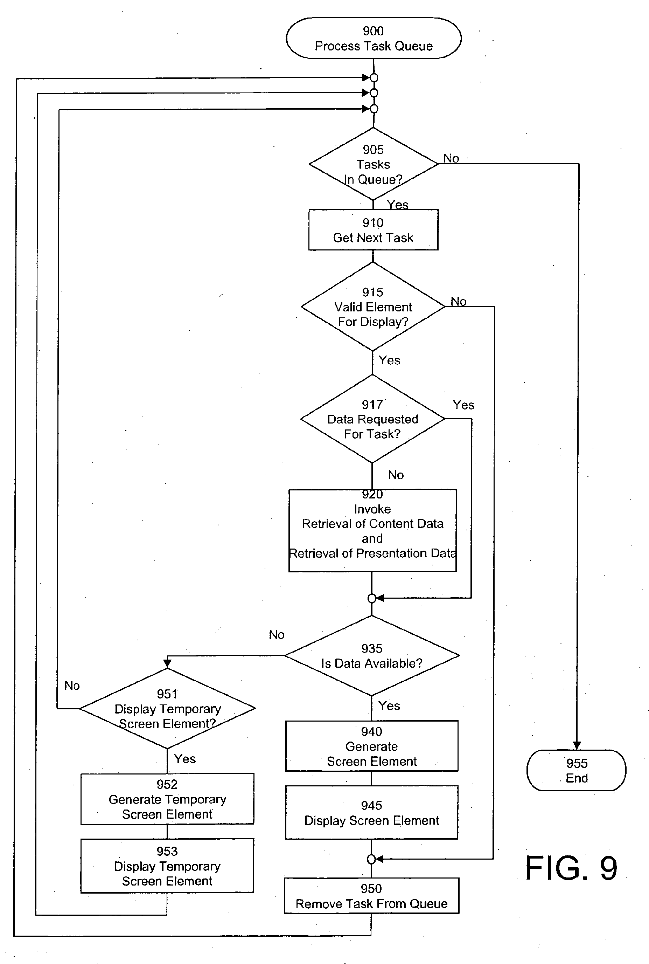

In step 820, method 800 invokes a processing of task queue 125 (method 900). Display engine 105 processes task queue 125 in order to retrieve data and to display screen elements 135, derived from screen element descriptor 300. Method 900 is discussed below in association with FIG. 9. Method 900 is executed asynchronously to the execution of method 800. As such, method 800 need not wait for the completion of method 900 in order to advance from step 820. Instead, after the invocation of method 900, from step 820, method 800 advances to step 825.

In step 825, display engine 105 waits for event manager 155 to recognize a new event. As mentioned above, an event may arise from browser screen 170, or from data request manager 160 when data has been retrieved from server 165 and available for further processing. Events may be received by the event manager 155 during display processing or at any other time. While no event is recognized, method 800 remains in step 825. When an event is recognized, method 800 advances to step 830. Also, if no event is received after a given period, then method 800 will advance to step 830 anyway.

Since step 820 is non-blocking, i.e. requests are made asynchronously and do not need to complete before method 800 advances from step 820 to step 825, display engine 105 remains responsive to user interaction even when data requests are being made.
This is a principle advantage of display engine 105, especially given that server requests for content data may take relatively long periods to complete.

In step 830, display engine 105 determines whether the event requires method 800 to quit. If the event does not require method 800 to quit, then if the event has associated artifacts, the artifacts are applied by controller 110 to update context 115, and method 800 loops back to step 815. The consideration of the artifacts is further discussed below, in association with method 900, step 915. Also, context 115 of the application may be persisted to the server to save the applications state. Other events could also cause this to be performed without 'qu itting'. If the event requires method 800 to quit, method 800 advances to step 835.

In step 835, method 800 ends.

FIG. 9 is a flowchart of a method 900 for processing tasks in task queue 125. Method 900 is invoked by method 800, step 820. Method 900 may process a plurality of tasks in parallel with one another. That is, method 900 can initiate a first task from task queue 125, and while the first task is pending, initiate a second task. In this regard, task queue 125 includes a field that indicates the status of a task (see FIG. 7, task queue 700, status field). For example, the status field of a task may indicate that the task is either (i) unstarted, or (ii) pending. Method 900 starts by entering step 905.

In step 905, display engine 105 checks whether there are any tasks in task queue 125. If there is a task in task queue 125, then method 900 advances from step 905 to step 910. If there are no tasks in task queue 125, i.e., task queue 125 is empty, then method 900 advances from step 905 to step 955.

In step 910 the next task on task queue 125 is selected by task manager 120. Tasks are selected based on execution order 710, starting with the first task in task queue 125. When the last task in task queue 125 has been executed, then the first task will be selected as the next task for execution. If there is only one task in task queue 125, then it will be selected for processing. Other task selection methods that allow optimization of system performance are possible. From step 910, method 900 advances to step 915.

In step 915, a check is performed to determine whether the current screen element descriptor 300 associated with the task being processed is valid for display. To achieve this check, controller 110 matches filter 350, within the screen element descriptor 300 of the task being processed, with context 115, as explained previously. Referring back to step 830, as mentioned above, artifacts are applied by controller 110 to update display context 520, command context 530, and meta data context 540. Such changes may invalidate tasks that are already in task queue 125. This is why, in step 915, a validity check is made again for each task. As the state of the application changes, screen element descriptors 300 that were previous candidates for processing may, due to event interaction, no longer be required. Accordingly, in step 915, method 900 determines whether the current screen element descriptor 300 is valid, and thus determines whether further processing steps should be performed. In order to achieve this, controller 110 compares filter 350 against the display context 520, and by validating that target 340 is available on browser screen 170. If the current screen element descriptor 300 is valid, method 900 advances to step 917. If the current screen element descriptor 300 is not valid, method 900 advances from step 915 to step 950.

In step 917, a check is performed by controller 110 to ascertain whether data requests to be initiated in step 920 have already been made. Each task has a status field as shown in FIG. 7. When a request is made, by controller 110, for data associated with a task, a flag is set in the status field of that task. Controller 110 checks the status fields to see whether this flag is set in order to ascertain whether the data requests to be initiated have already been made. If data requests have already been made, then method 900 advances from step 917 to 935. If data requests have not already been made, then method 900 advances from step 917 to 920. Other status flags may also be set within the status field of a task.

In step 920, controller 110 invokes a retrieval of content data and invokes a retrieval of presentation data. The task to be processed is selected, as already discussed. The command 305 associated with that task, as referenced in screen element descriptor 300, is executed by request execution engine 145, and the resultant content data for command 305 is retrieved via data request manager 160. Parameters, e.g., an alert identity, associated with command 305 are retrieved from command context 530. The parameter may be altered through the receipt of events by event manager 155, and hence based on the context of the application, different alert identity values might be passed with the command 305 at different stages of the execution of the application.

The data requests made by request execution engine 160 are asynchronous to one another, and therefore method 900 can advance from step 920 without waiting for command 305 to be executed, and without waiting for the content data and presentation data to be retrieved. Instead, after the invocation of the retrieval of content data and invocation of the retrieval of presentation data, from step 20, method 900 advances to step 935.

In step 920, the invocation of the retrieval of presentation data ultimately results in the retrieval of presentation data associated with presentation descriptor 310. Request execution engine 145 processes requests, received from controller 110 and based upon the task being processed, to retrieve presentation descriptor 310, and more specifically for transform logic 325 and meta data 315. However, presentation descriptor 310 needs to be retrieved by data request manager 160 from server 165 only once. Presentation data resulting from requests for transform logic 325 is stored in cache 150 by data request manager 160. Presentation data resulting from requests for meta data 315 is performed only once and stored in the meta data context 540.

In step 935, display engine 105 checks to see if any of the data requests initiated in step 920 have been completed. That is, display engine 105 determines whether the content data and presentation data for a task has been returned from data request manager 160 and that the data is available for further processing. If the data is not yet available then method 900 advances to step 951. If the data is available then method 900 advances to step 940.

In step 940, display engine 105 processes the data, and more specifically, content engine 130 generates screen element 135. The resultant screen element 135 may be configured to include a fragment of HTML or XHTML. As mentioned above, HTML and XHMTL enable targets (e.g., target B 435) to be partitioned into subordinate targets, for example where a screen element fragment of XHTML is placed in a target location of a larger XHTML document. The fragment is a presentation element 605 (see FIG. 6). The resultant screen element may comprise one or more presentation elements 605. Presentation element 605 may define a new target and contain a target identity 610 for this purpose. Presentation element 605 may also include one or more additional hidden artifacts 615, which will be used to change the context 115 of the display engine 105 in association with events from user interaction. From step 940, method 900 advances to step 945.

In step 945, content engine 130 passes screen element 135 to target manager 140, with a target 340 that indicates where screen element 135 should be displayed on browser screen 170. Target manager 140 maps screen element 135 to the indicated target area on browser screen 170 (e.g., see FIG. 4). From step 945, method 900 advances to step 950.

In step 950, the task is removed from task queue 125 by task manager 110. This is either because (a) step 915 determined that the current screen element descriptor 300 is invalid, or (b) in step 945 the screen element associated with the current screen element descriptor 300 has been displayed. Method 900 then loops back to step 905.

In step 951, display engine 105 checks to see if a temporary screen element to present temporary information should be displayed for the current task. The purpose of this temporary screen element is to provide feedback, e.g. a temporary message that indicates "data loading", to the user about the progress of data requests associated with this task, and to display appropriate content on browser screen 170 while the data associated with the request is retrieved. Whether a task can have a temporary screen element displayed is predefined, and this information is set in meta data 315 in screen element descriptor 300. Display engine 105 checks here to ascertain whether a temporary screen should be displayed.

If a temporary screen element is required, then method 900 advances to step 952. If a temporary screen element is not required then method 900 then loops back to step 905.

In step 952 a temporary screen element is generated. Step 952 is identical to step 940 except that step 952 deals with the generation of a temporary screen element. In this respect, the content data and presentation data that are utilized by content engine 130 to generate screen element 135 are global data loaded for the purpose of temporary screen element generation, as discussed previously. From step 952 method 900 advances to step 953.

In step 953 the temporary screen element is displayed on browser screen 170. Step 953 is identical to step 945 except that step 953 deals with the generation of a temporary screen element. From step 953 method 900 the loops back to step 905.

In step 955, method 900 ends.

As mentioned above, in step 920, data requests made by request execution engine 160 are asynchronous to one another. Thus, display engine 105 provides for asynchronous population of browser screen 170. For example, display engine 105 can request first data (e.g., first content data and first presentation data) for a first region of browser screen 170, and second data for a second region of browser screen 170. Upon receipt of the first data, yet prior to the receipt of the second data, display engine 105 presents a first screen element 135 in the first region, based on the first data, and can commence processing of an input that results from a user interaction with the first screen element 135. Display 105 can receive the second data, and subsequent to the processing of the input, present a second screen element 135 in the second region, based on the second data. That is, the user can interact with the first screen element 135 without having to wait for the presentation of the second screen element 135, and the processing of the input can result in a change of information being presented in the first region. Also, the processing of the input can result in a change of information being presented in the second region.

A screen element descriptor 300 would indicate a target 340 for the first screen element 135. Target manager 340 would access target 340 and place the first screen element 135 at the target.

The first screen element 135 can contain a hidden artifact (see FIG. 2). Accordingly, data structure 600 would include a hidden artifact 615 associated with the region where the first screen element 135 is being displayed. If the user interaction activates the hidden artifact, then display engine 105 accesses data structure 600 and performs an action based on hidden artifact 615. For example, the action may involve the replacement of a screen element already on browser screen 170 with a newly generated screen element that contains a first sub-region and a second sub-region, and presenting some new or additional information in each of the first and second sub-regions. To facilitate the creation of the sub-regions, display engine 105 would maintain a screen element descriptor 300 for each of the sub-regions.

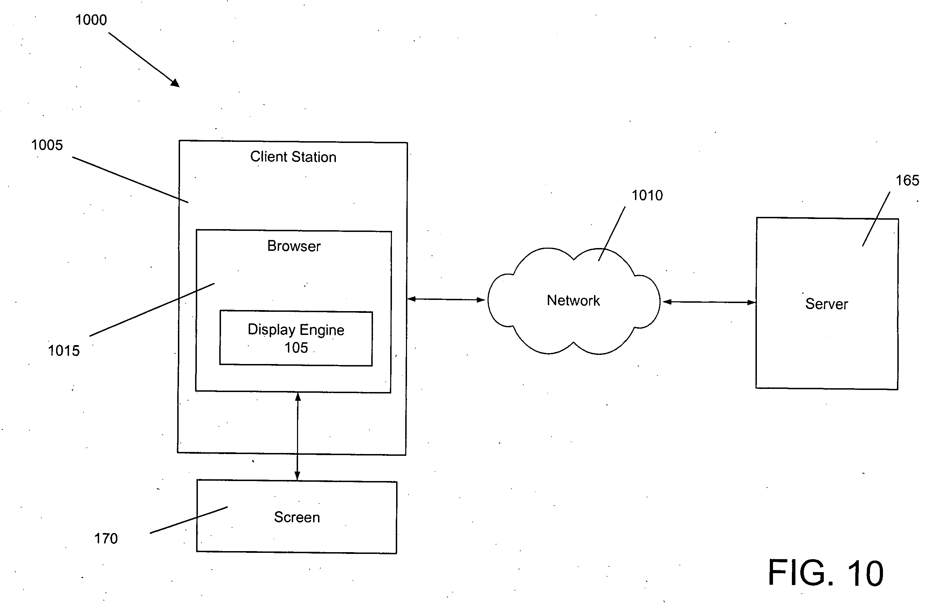

FIG. 10 is a block diagram of a system 1000 in which display engine 105 is present and operative. System 1000 includes a client station 1005 connectable to at least one server 165 either directly or via a network 1010 such as the Internet, a local or wide area network or similar, or any other suitable network. Client station 1005 includes a browser 1015, such as an Internet browser, which is operative to obtain and present to a user of browser 1015, data, via a browser screen 170 that is connected to or a part of client station 1005. Display engine 105 is situated within browser 1015 and interacts with browser 1015 to obtain data from server 165, or elsewhere, and to present that data to the user of browser 1015. The operation of display engine 105 is as described previously with reference to FIG. 8 and FIG. 9.

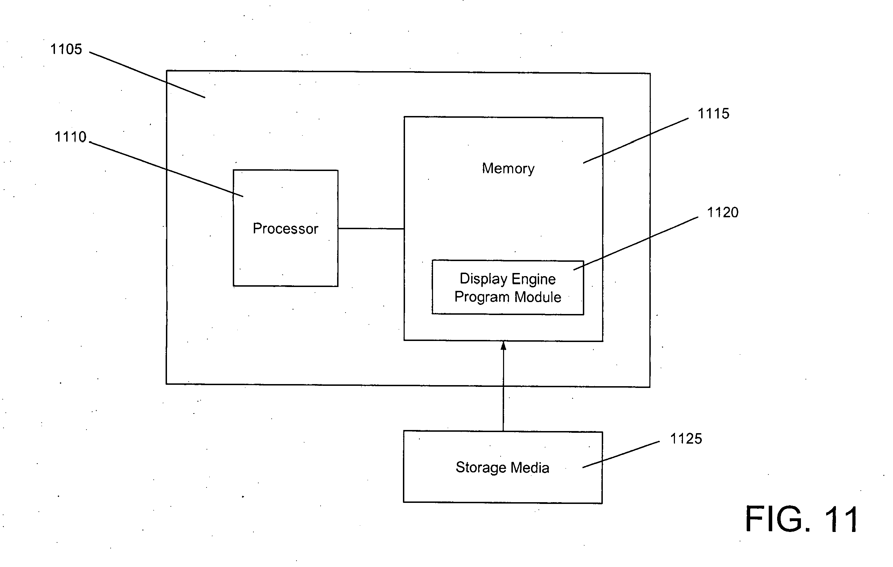

FIG. 11 is a block diagram of an apparatus 1105 that facilitates the operation of display engine 105. Apparatus 1105 includes a processor 1110 and a memory 1115, which may form a part of client station 1005. In an embodiment, memory 1115 contains a program module 1120 that contains instructions that control processor 1110 to execute the operations of display engine 105. The term "module" is used herein to denote a functional operation that may be embodied either as a stand-alone component or as an integrated configuration of a plurality of sub-ordinate components. Although in FIG. 11 program module 1120 is shown as being installed into memory 1115, and therefore being implemented in software, program module 1120 could be implemented in any of hardware, firmware, software, or a combination thereof. Program module 1120 can also be embodied on a storage media 1125, e.g., a computer disk (CD), and subsequently loaded into memory 1115.

The system described herein provides a generic approach for the delivery of web applications using a display engine that has the following advantages:
A. The system can be easily re-configured in order to provide a range of different content or to provide different forms of application.
B. The system is particularly suited for data rich applications, where most of the content is dynamic and subject to change, and for the display of complex data sets where the server retrieval rates vary for different portions of the data for display.
C. The system remains responsive to user interaction even when large result sets are being retrieved.
D. The system provides target-based template methods that can be used to control the "look" of the application. Targets can be added and removed to include or remove additional content, and can be re-configured for different applications or for different versions of the same application.
E. The application context is maintained by the display engine and can be persisted back to the server in order to save the state of the application. This allows the application to 're-start' from the point that it completed.
F. The application performs caching in order to improve performance and to minimize server requests.
G. The application uses a task manager and task queue to process screen elements for display. The dependencies between these screen elements is controlled by the task manager and prioritized in terms of order of execution.

The techniques described herein are exemplary, and should not be construed as implying any particular limitation on the present invention. It should be understood that various alternatives, combinations and modifications could be devised by those skilled in the art. The present invention is intended to embrace all such alternatives, modifications and variances that fall within the scope of the appended claims.

## Claims

1. A method comprising:
requesting first data for a first region of a display, and second data for second region of said display;
presenting first information in said first region, based on said first data;
commencing processing of an input that results from a user interaction with said first information; and
subsequent to said commencing processing of said input, presenting second information in said second region, based on said second data.

2. The method of claim 1, wherein said processing of said input comprises changing information being presented in said first region.

3. The method of claim 1, wherein said processing of said input comprises changing information being presented in said second region.

4. The method of claim 1, further comprising:
maintaining a data structure that indicates a location for said first information in said first region,
wherein said presenting said first information includes accessing said data structure and placing said first information at said location.

5. The method of claim 1, further comprising:
maintaining a data structure that indicates an artifact associated with said first region,
wherein said processing of said input comprises accessing said data structure and performing an action based on said artifact.

6. The method of claim 1, wherein said first data comprises (a) data that represents said first information, and (b) data that defines a layout of said first information in said first region.

7. The method of claim 1, wherein said processing of said input comprises:
redefining said first region to include a first sub-region and a second sub-region; and
presenting third information in said first sub-region.

8. The method of claim 7, further comprising:
maintaining a data structure that indicates a location for said first sub-region within said first region,
wherein said presenting said third information comprises accessing said data structure and placing said third information at said location.

9. The method of claim 1, further comprising, prior to said presenting said second information, presenting temporary information in said second region.

10. A storage media, comprising instructions for controlling a processor to execute a method that includes:
requesting first data for a first region of a display, and second data for second region of said display;
presenting first information in said first region, based on said first data; commencing processing of an input that results from a user interaction with said first information; and
subsequent to said commencing processing of said input, presenting second information in said second region, based on said second data.

11. A system comprising a module that executes a method that includes:
requesting first data for a first region of a display, and second data for second region of said display;
presenting first information in said first region, based on said first data;
commencing processing of an input that results from a user interaction with said first information; and
subsequent to said commencing processing of said input, presenting second information in said second region, based on said second data.
